(19) Europäisches Patentamt
European Patent Office
Office européen des brevets

(11) **EP 4 760 240 A1**

(12) **EUROPEAN PATENT APPLICATION**
published in accordance with Art. 153(4) EPC

(43) Date of publication:
**17.06.2026 Bulletin 2026/25**

(51) International Patent Classification (IPC):
**G01N 21/64** (2006.01)　　**G01J 1/42** (2006.01)

(21) Application number: **24851122.2**

(86) International application number:
**PCT/CN2024/110980**

(22) Date of filing: **09.08.2024**

(87) International publication number:
**WO 2025/031478 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.08.2023　CN 202311009482**

(71) Applicant: **Femtosecond Research Center Co., Ltd.**
**Guangzhou, Guangdong 510000 (CN)**

(72) Inventors:
• **ZHU, Xin**
**Guangzhou, Guangdong 510000 (CN)**
• **XU, Bingwei**
**Guangzhou, Guangdong 510000 (CN)**
• **CHEN, Yan**
**Guangzhou, Guangdong 510000 (CN)**

(74) Representative: **Bayramoglu et al.**
**Mira Office**
**Kanuni Sultan Süleyman Boulevard 5387**
**Street Beytepe, floor 12, no:50**
**06800 Cankaya, Ankara (TR)**

(54) **OPTICAL SIGNAL DETECTION SYSTEM AND CONFIGURATION METHOD THEREFOR, AND FEMTOSECOND LASER IMAGING SYSTEM**

(57)　Provided are an optical signal detection system and a configuration method thereof, and a femtosecond laser imaging system. The optical signal detection system includes: an optical signal spatial positioning and regulation device, and a plurality of optical signal detection devices configured to measure multimodal signals, where the optical signal spatial positioning and regulation device is configured to perform spatial positioning and regulation on the multimodal signals incident from various angles to obtain a first optical signal and output the first optical signal into a first main optical path, such that the first optical signal is adjusted to a specific spatial range within a set transmission distance; and the optical signal detection devices are distributed at intervals around the first main optical path, each configured to separate a branch optical path from the first optical signal in the first main optical path and to acquire and measure a respective modality of optical signal. This technical solution ensures complete acquisition of photons for each channel of the multimodal signals incident from different angles, ensures the intensity of the detected signals, and enhances the imaging accuracy of multimodal images.

Multimodal signals

Independent optical signal detection devices

**FIG. 2**

# Description

## TECHNICAL FIELD

The present disclosure relates to the technical field of lasers, and in particular to an optical signal detection system and a configuration method thereof, and a femtosecond laser imaging system.

## BACKGROUND TECHNOLOGY

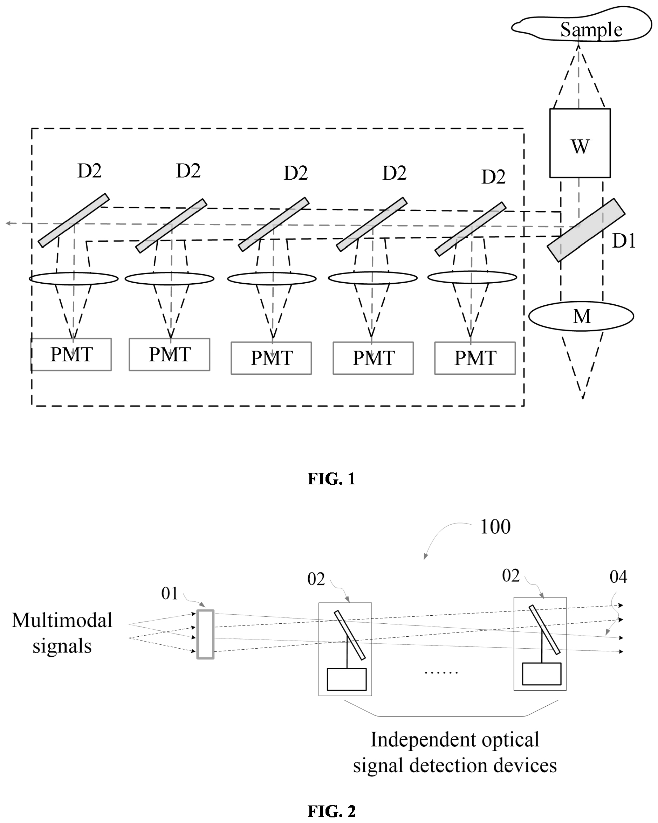

In a femtosecond laser imaging system, a femtosecond pulsed laser is focused through a galvanometer mirror M and an objective lens W onto a sample, generating fluorescence and harmonic signals. These optical signals include optical signals of a plurality of modalities (i.e., multimodal signals). To detect the nonlinear modal parameters of the optical signal for each modality, a corresponding detection system needs to be designed. Referring to FIG. 1, which is a schematic diagram of a multimodal signal detection system (corresponding to the portion within the dashed box) according to an example, the multimodal signals generated by the optical element group including the galvanometer mirror M return along the original path. When the multimodal signals reach the main dichroic mirror (D1), they are reflected into the main optical path. The main optical path is provided with a plurality of dichroic mirrors (D2), equal in number to the nonlinear modalities required by the imaging system. These dichroic mirrors form a plurality of branch optical paths, each configured to extract the nonlinear modal parameters from a different wavelength range of the multimodal signals. The multimodal signals then enter the photomultiplier tubes (PMTs) located at the end of each branch optical path for measurement. As illustrated, five branch optical paths are designed, each corresponding to the detection by one PMT.

To clearly reveal the complete information embodied in the multimodal system, the femtosecond laser imaging system needs to detect as many photons from the fluorescence and harmonic signals as possible. However, as the various fluorescence and harmonic signals to be detected propagate along the main axis of the branch optical paths, the incident angles of the multimodal optical signals generated at different positions in the sample vary due to the design of the spatial positions of the galvanometer mirror, the objective lens, the main dichroic mirrors, and the PMTs. This results in fluctuating spatial positions of the actual spot of the imaging signals in the main optical path. The spot in the main optical path changes with the propagation distance, and the optical path angle variation caused by the movement of the galvanometer mirror M leads to significant changes in the size of the spot close to the central axis depending on its position along the optical axis. Furthermore, due to the limitation of the spatial position, when dichroic mirrors of a fixed size and specification are used at different positions of the branches in the first main optical path, the cross-sectional area of the spot at certain locations along the main optical path can be large. Consequently, the dichroic mirrors cannot direct all corresponding photons from the main optical path into the PMTs for acquisition. This leads to partial loss of the optical modal signals, adversely affecting signal intensity and reducing the imaging accuracy of multimodal images.

## CONTENT OF THE INVENTION

In view of this, it is necessary to provide an optical signal detection system that addresses at least one of the above technical problems, ensuring complete detection of optical modal signals and improving the imaging accuracy of multimodal images.

An optical signal detection system includes an optical signal spatial positioning and regulation device, and a plurality of optical signal detection devices configured to measure multimodal signals, where the optical signal spatial positioning and regulation device is internally provided with an optical element with a specific optical parameter; and the optical signal detection devices each are internally provided with an optical element and an optical signal measuring device;

the optical signal spatial positioning and regulation device is configured to perform spatial positioning and regulation on the multimodal signals incident from various angles to obtain a first optical signal and output the first optical signal to a first main optical path, such that the first optical signal is adjusted to a specific spatial range within a set transmission distance on the first main optical path; and
the optical signal detection devices are distributed at intervals around the first main optical path, and are each configured to separate an optical signal from the first optical signal in the first main optical path to form a respective independent branch optical path and to acquire and measure a respective modality of optical signal via the branch optical path.

In an embodiment, the optical signal detection devices each include a first dichroic mirror disposed on the first main optical path, and a small convex lens and a PMT that are disposed on the branch optical path; and the first dichroic mirror is disposed at a position with a set distance from the optical signal spatial positioning and regulation device; and
the first dichroic mirror is configured to separate the optical signal from the first optical signal in the first main optical path to form the branch optical path; and the branch optical path is directed through the small convex lens into the PMT for measurement.

In an embodiment, the optical signal spatial positioning and regulation device includes a main convex lens with a set parameter and an optical path guiding device; and
the main convex lens is configured to perform spatial positioning and regulation on the multimodal signals incident from various angles and output the first optical signal; and the optical path guiding device is configured to guide the first optical signal into the first main optical path.

In an embodiment, the optical path guiding device includes a pair of reflecting mirrors; the pair of reflecting mirrors includes a first reflecting mirror and a second reflecting mirror disposed opposite to each other; and the first reflecting mirror is disposed at a set distance from a light exit end of the main convex lens; and the first optical signal is reflected by a reflecting surface of the first reflecting mirror, and then reflected by a reflecting surface of the second reflecting mirror into the first main optical path.

In an embodiment, the optical path guiding device includes a second dichroic mirror and a third reflecting mirror; and the second dichroic mirror is disposed at a set distance from a light exit end of the main convex lens;

the main convex lens is configured to focus the incident multimodal signals and output the first optical signal; and the first optical signal is reflected to the third reflecting mirror through the second dichroic mirror, and is reflected by the third reflecting mirror into the first main optical path;

a second optical signal is separated from the first optical signal through the second dichroic mirror, and is directly transmitted into a second main optical path; and

a plurality of optical signal detection devices are distributed around the second main optical path, and are each configured to separate an optical signal from the second optical signal in the second main optical path to form a respective independent branch optical path and to acquire and measure a respective modality of optical signal.

In an embodiment, the optical signal detection devices are distributed at intervals on two sides of the first main optical path and/or the second main optical path.

In an embodiment, the optical signal detection devices are distributed at intervals in a three-dimensional space around the first main optical path and/or the second main optical path.

A configuration method of an optical signal detection system is provided, where the optical signal detection system includes: an optical signal spatial positioning and regulation device, and a plurality of optical signal detection devices configured to measure multimodal signals; the optical signal spatial positioning and regulation device is internally provided with an optical element with a specific optical parameter; and the optical signal detection devices each are internally provided with an optical element and an optical signal measuring device;

the optical signal spatial positioning and regulation device is configured to perform spatial positioning and regulation on the multimodal signals incident from various angles to obtain a first optical signal and output the first optical signal to a first main optical path, such that the first optical signal is adjusted to a specific spatial range within a set transmission distance on the first main optical path;

the optical signal detection devices are distributed at intervals around the first main optical path, and are each configured to separate an optical signal from the first optical signal in the first main optical path to form a respective independent branch optical path and to acquire and measure a respective modality of optical signal via the branch optical path; and

the configuration method includes:

establishing an optical path model according to the incident multimodal signals;

calculating, based on the optical path model, the optical parameter of the optical element in the optical signal spatial positioning and regulation device when a spot including the multimodal optical signals is adjusted to a specified spatial range;

calculating projected intercept values of the optical signal detection devices distributed in a main axis direction of the branch optical path; and

determining a parameter specification and a positional parameter of the optical element in each of the optical signal detection devices according to the corresponding modality measured by each of the optical signal detection devices and the projected intercept value thereof.

In an embodiment, the optical signal detection devices each include a first dichroic mirror disposed on the first main optical path, and a small convex lens and a PMT that are disposed on the branch optical path; and the first dichroic mirror is disposed at a position with a set distance from the optical signal spatial positioning and regulation device; and

the first dichroic mirror is configured to separate the optical signal from the first optical signal in the first main optical path to form the branch optical path; and the branch optical path is directed through the small convex lens into the PMT for measurement.

In an embodiment, the optical signal spatial positioning and regulation device includes a main convex lens with a set parameter and an optical path guiding device; and

the main convex lens is configured to perform spatial positioning and regulation on the multimodal signals incident from various angles and output the first optical signal; and the optical path guiding device is configured to guide the first optical signal into the first main optical path.

In an embodiment, the optical path guiding device includes a pair of reflecting mirrors; the pair of reflecting mirrors includes a first reflecting mirror and a second reflecting mirror disposed opposite to each other; and the first reflecting mirror is disposed at a set distance from a light exit end of the main convex lens; and the first optical signal is reflected by a reflecting surface of the first reflecting mirror, and then reflected by a reflecting surface of the second reflecting mirror into the first main optical path.

In an embodiment, the optical path guiding device includes a second dichroic mirror and a third reflecting mirror; and the second dichroic mirror is disposed at a set distance from a light exit end of the main convex lens;

the main convex lens is configured to focus the incident multimodal signals and output the first optical signal; and the first optical signal is reflected to the third reflecting mirror through the second dichroic mirror, and is reflected by the third reflecting mirror into the first main optical path;

a second optical signal is separated from the first optical signal through the second dichroic mirror, and is directly transmitted into a second main optical path; and

a plurality of optical signal detection devices are distributed around the second main optical path, and are each configured to separate an optical signal from the second optical signal in the second main optical path to form a respective independent branch optical path and to acquire and measure a respective modality of optical signal.

In an embodiment, the optical signal detection devices are distributed at intervals on two sides of the first main optical path and/or the second main optical path.

In an embodiment, the optical signal detection devices are distributed at intervals in a three-dimensional space around the first main optical path and/or the second main optical path.

In an embodiment, the calculating, based on the optical path model, the optical parameter of the optical element in the optical signal spatial positioning and regulation device when a spot is adjusted to a specified spatial range includes:

determining, based on the optical path model, a distance between the incident multimodal signals and a main convex lens and an incident angle range; determining the specified spatial range to which the spot is adjusted; and

calculating the optical parameter of the optical element in the optical signal spatial positioning and regulation device according to the distance, the incident angle range, and the specified spatial range.

In an embodiment, the determining a parameter specification and a positional parameter of the optical element in each of the optical signal detection devices according to the corresponding modality measured by each of the optical signal detection devices and the projected intercept value thereof includes:

acquiring a working parameter of a PMT used by each of the optical signal detection devices; acquiring a first distance between a small convex lens of each of the optical signal detection devices and the first main optical path and a second distance between the small convex lens and the PMT; and determining a parameter specification of a first dichroic mirror and the small convex lens according to the projected intercept value, the first distance, the second distance, and the working parameter of the PMT.

A femtosecond laser imaging system includes the optical signal detection system.

A femtosecond laser imaging system is configured to perform optical signal detection by the configuration method of an optical signal detection system.

A femtosecond laser imaging system includes the optical signal detection system, and is configured to perform optical signal detection by the configuration method of an optical signal detection system.

In the optical signal detection system, the configuration method thereof, and the femtosecond laser imaging system, the optical signal spatial positioning and regulation device provided with an optical element with a specific optical parameter performs spatial regulation on the multimodal signals incident from various angles to obtain a first optical signal and outputs the first optical signal into the first main optical path. When the first optical signal is transmitted along the first main optical path, the position of the spot formed by the multimodal signals is adjusted to a specific spatial range within a set transmission distance. Subsequently, a plurality of optical signal detection devices distributed around the first main optical path separate a plurality of independent branch optical paths from the first optical signal, followed by the acquisition and measurement of the optical signals from each modality. This technical solution ensures complete acquisition of photons for each channel of the multimodal signals incident from different angles within a limited spatial range, avoids the loss of optical modal signals, ensures the intensity of the detected signals, and enhances the imaging accuracy of multimodal images.

**DESCRIPTION OF THE DRAWINGS**

FIG. 1 is a schematic diagram of a multimodal signal detection system according to an example; FIG. 2 is a structural schematic diagram of an optical signal detection system according to an embodiment; FIG. 3 is a side view of a first optical signal spot according to an example; FIG. 4 is a front view of a first optical signal spot according to an example;

FIG. 5 is a structural schematic diagram of an optical signal detection device according to an embodiment;

FIG. 6 is a schematic distribution diagram of optical signal detection devices according to an example;

FIG. 7 is a schematic layout diagram of optical signal detection devices according to an example;

FIG. 8 is a structural schematic diagram of an optical signal spatial positioning and regulation device according to an example;

FIG. 9 is a structural schematic diagram of an optical signal spatial positioning and regulation device according to another embodiment;

FIG. 10 is a flowchart of a configuration method of an optical signal detection system according to an embodiment; and

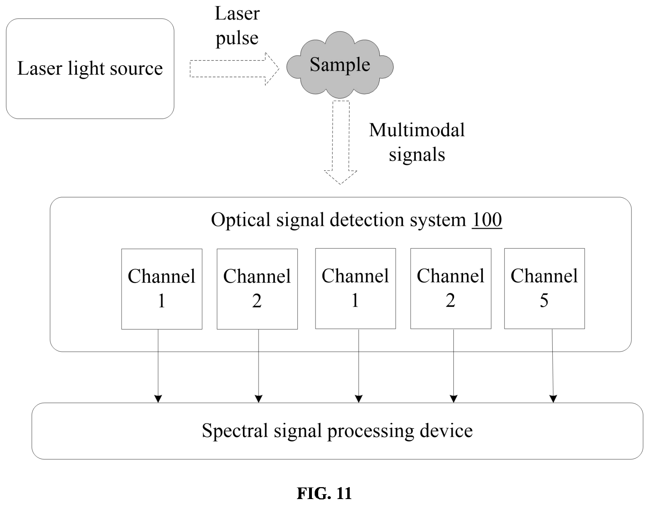

FIG. 11 is a structural schematic diagram of a femtosecond laser imaging system according to an example.

## SPECIFIC IMPLEMENTATIONS

To make the objectives, technical solutions, and advantages of the present disclosure clearer, the present disclosure is further described in detail below with reference to the drawings and embodiments. It should be understood that the specific embodiments described herein are merely intended to explain the present disclosure, rather than to limit the present disclosure.

The technical solution of the present disclosure is applied in the imaging process of a femtosecond laser imaging system, and can perform accurate quantitative measurement on the generated fluorescence and harmonic signals, thereby improving the imaging accuracy of multimodal images. Accordingly, the present disclosure provides optical signal detection system 100. Refer to FIG. 2, FIG. 2 is a structural schematic diagram of an optical signal detection system according to an embodiment. The optical signal detection system includes optical signal spatial positioning and regulation device 01 and a plurality of optical signal detection devices 02 configured to measure multimodal signals, and each optical signal detection device 02 is distributed on first main optical path 04. The optical signal spatial positioning and regulation device 01 is internally provided with an optical element with a specific optical parameter, and the optical signal detection device 02 is internally provided with an optical element and an optical signal measuring device. The optical signal spatial positioning and regulation device 01 is configured to perform spatial positioning and regulation on the multimodal signals generated on a sample at various incident angles to obtain a first optical signal and output the first optical signal to the first main optical path 04. Under the action of the optical element of the optical signal spatial positioning and regulation device 01 with a specific optical parameter, the position distribution of a spot including various multimodal signals is adjusted to a specific spatial range within a set transmission distance when the first optical signal is transmitted on the first main optical path 04.

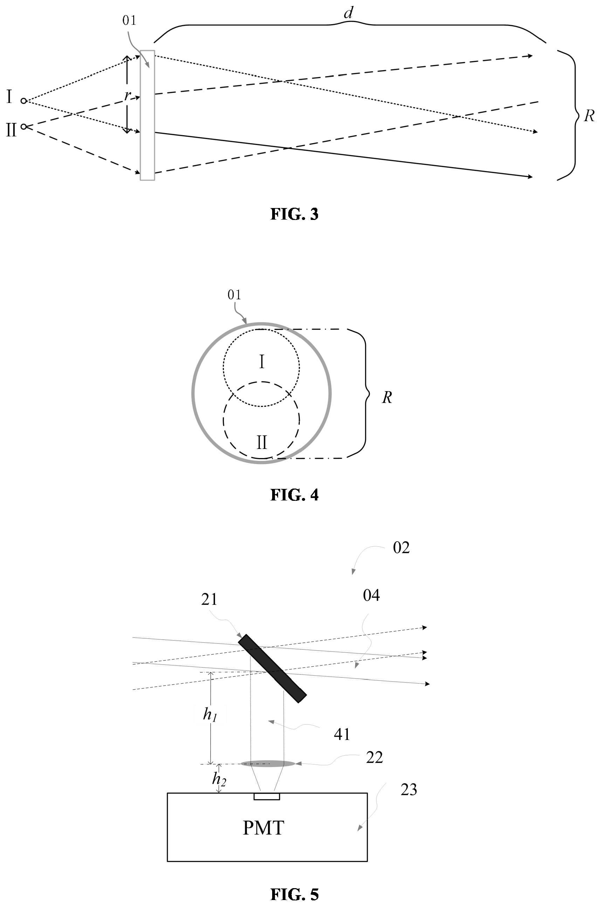

Refer to FIG. 3, FIG. 3 is a side view of a first optical signal spot according to an example. In the side view of FIG. 3, after the multimodal signals generated on the sample at different incident directions are regulated by the optical signal spatial positioning and regulation device 01, a spot within specific spatial range R is formed within set transmission distance d of the first main optical path 04. The solid line light rays and dashed line light rays in the figure represent the light ray states at upper and lower edge positions of the optical signal spatial positioning and regulation device 01, respectively. With a central axis of the first main optical path 04 as a reference, some of the incident light beams are focused, while others approach a diverging state. Refer to FIG. 4, FIG. 4 is a front view of a first optical signal spot according to an example. The view shown in FIG. 4 is taken along an optical path transmission direction. The light ray I and light ray II in the figure represent the situations at the upper and lower edge positions of the optical signal spatial positioning and regulation device 01, respectively. The situations on the left and right sides are similar. Thus, all multimodal signals form a spot within a specific spatial range within the set transmission distance of the first main optical path 04 after being incident from the optical signal spatial positioning and regulation device 01.

Each optical signal detection device 02 is distributed at intervals within a certain spatial distance range of the first main optical path 04, and can be distributed on two sides of the first main optical path 04 or in a three-dimensional space around it. The optical signal detection devices 02 each separate one optical signal from the first main optical path 04 to form independent branch optical path 41. Each independent branch optical path 41 acquires and measures at least one modality of optical signal based on the optical element and the optical signal measuring device in the optical signal detection devices 02. Generally, each optical signal detection device 02 is configured to detect one modality of optical signal.

The above optical signal detection system 100 adopts a detection system architecture including the optical signal spatial positioning and regulation device 01 and a plurality of optical signal detection devices 02. The optical signal spatial positioning and regulation device 01 performs preliminary spatial positioning and regulation on the multimodal signals generated on the sample at various incident angles, such that the position of the spot including various multimodal optical signals is adjusted to a specific spatial range within the set transmission distance on the first main optical path 04. Under the condition of space limitation, each optical signal detection device 02 can adopt optical elements of a certain specification to perform the complete acquisition and measurement of each modality of optical signal within a limited spatial range. Almost all photons of each modality of optical signal can enter the optical signal detection device 02, thereby avoiding the signal loss phenomenon in the application of optical modalities, ensuring that the acquisition parameters of each channel are complete and effectively improving the imaging accuracy of multimodal image detection.

To clarify the technical solution of the present disclosure more clearly, more embodiments are described below in conjunction with the drawings.

In an embodiment, refer to FIG. 5, FIG. 5 is a structural schematic diagram of an optical signal detection device according to an embodiment. Furthermore, the optical signal detection device 02 may include first dichroic mirror 21, and small convex lens 22 and PMT 23 disposed on branch optical path 41. The first dichroic mirror 21 is disposed on the first main optical path 04 to separate the branch optical path 41 from the first main optical path 04. The small convex lens 22 focuses or collimates the optical signal of the branch optical path 41, and then the optical signal enters the PMT 23 for measurement.

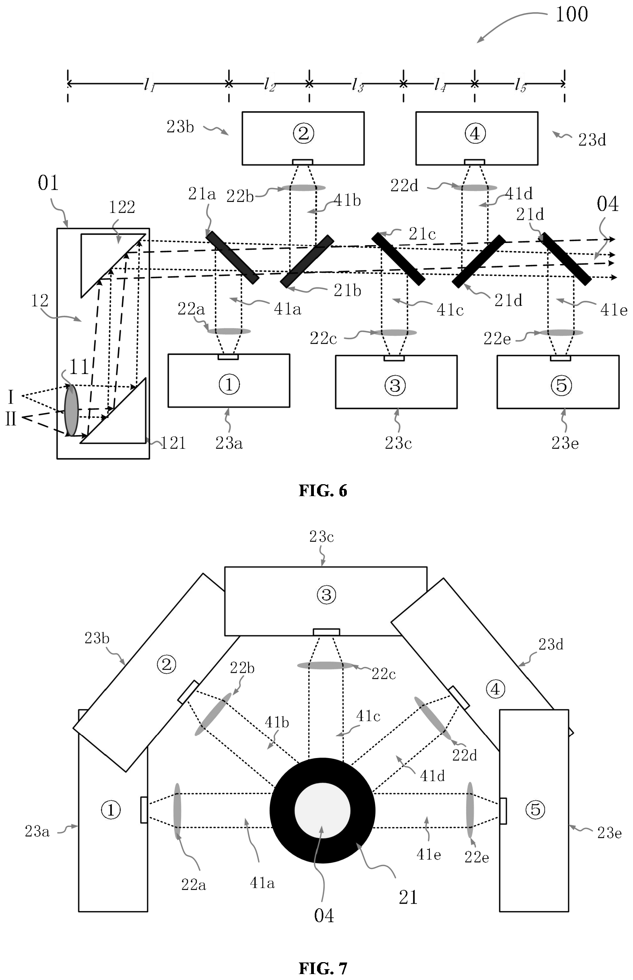

For the position distribution of the optical signal detection devices 02, refer to FIG. 6, FIG. 6 is a schematic distribution diagram of an optical signal detection device according to an example. The figure takes the use of five optical signal detection devices 02 as an example, with the corresponding numbers (1) to (5). The first dichroic mirrors 21 are numbered 21a, 21b, 21c, 21d, and 21e, respectively. The branch optical paths 41 separated by the optical signal detection devices 02 are numbered 41a, 41b, 41c, 41d, and 41e, respectively. The PMTs 23 are numbered 23a, 23b, 23c, 23d, and 23e, respectively. The small convex lenses 22 are numbered 22a, 22b, 22c, 22d, and 22e, respectively. As illustrated, the spacing of each optical signal detection device 02 on the first main optical path 04 is different. The distances between the first dichroic mirrors 21a, 21b, 21c, 21d, and 21e after the second reflecting mirror 122 are $l_1$, $l_2$, $l_3$, $l_4$, and $l_5$, respectively.

To further improve the space utilization, each optical signal detection device 02 is distributed at intervals in the three-dimensional space around the first main optical path 04. Refer to FIG. 7, FIG. 7 is a schematic layout diagram of an optical signal detection device according to an example, which is a sectional view taken at an angle along the direction of a main optical axis. The five optical signal detection devices 02 are distributed in the three-dimensional space.

According to the technical solution of the above embodiment, since each optical signal detection device 02 is distributed at intervals on two sides of the first main optical path 04 or in a three-dimensional space around it, the distance from the first optical signal detection device 02 to the last optical signal detection device 02 can be shortened to the maximum extent. Combined with the regulation effect of the optical signal spatial positioning and regulation device 01 on the spot, the design can completely extract photons of each modality of optical signal within a short distance, thereby improving the acquisition efficiency of each channel and ensuring accurate detection results.

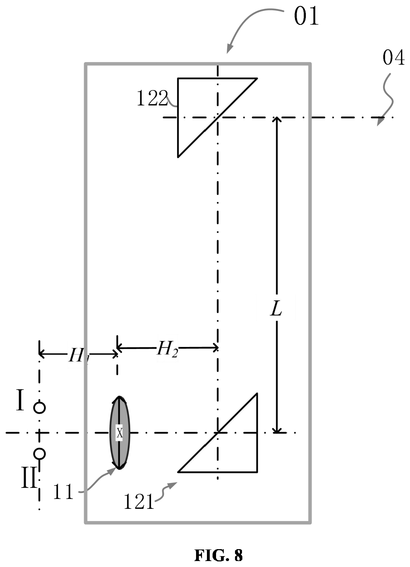

In an embodiment, refer to FIG. 8, FIG. 8 is a structural schematic diagram of an optical signal spatial positioning and regulation device according to an example. The optical signal spatial positioning and regulation device 01 includes main convex lens 11 with a set parameter and optical path guiding device 12. The light ray part is omitted in the figure, and the dashed line in the figure denotes a central axis of the optical path. The main convex lens 11 performs spatial positioning and regulation on the incident multimodal signals to output a first optical signal. The optical path guiding device 12 guides the first optical signal to the first main optical path. The optical path guiding device 12 may include a pair of reflecting mirrors, specifically first reflecting mirror 121 and second reflecting mirror 122. The first reflecting mirror 121 is disposed at a light exit end of the main convex lens 11, and first reflecting mirror 121 is disposed opposite to the second reflecting mirror 122. The incident multimodal signals are incident on a reflecting surface of the first reflecting mirror 121 from the light exit end of the main convex lens 11 for right-angle reflection, and then are incident on a reflecting surface of the second reflecting mirror 122 for right-angle reflection before being output to the first main optical path 04.

Exemplarily, the first reflecting mirror 121 and the second reflecting mirror 122 are right-angle prisms. The distance between the first reflecting mirror 121 and the main convex lens 11 is designed to be adjustable. The main convex lens 11, the first reflecting mirror 121, and the second reflecting mirror 122 control the spot diameter of the first main optical path 04 by adjusting the optical parameter of the main convex lens 11 and the adjustable distance between the first reflecting mirror 121 and the second reflecting mirror 122.

As shown in FIG. 8, it is assumed that a distance from the main convex lens 11 to an objective lens is H1, the incident angle range of the multimodal signals is *r*, and the first optical signal is output to the first main optical path 04 after two reflections through transmission distance *L* of the pair of reflecting mirrors 12. Thus, diameter *X* and focal length *q* of the main convex lens 11 are calculated as follows:

$$X = k_1 \times H_1 \times \tan\frac{\alpha}{2}$$

$$q = k_2 \times H_1 \times (\sin\frac{\alpha}{2})^2$$

In the above equations, k1 and k2 are set constants, and $\alpha$ is the incident light angle. Generally, the value range of the distance H1 is 50-300 mm, and the value range of the incident spot diameter r of the multimodal signals is 5-15 mm. The focal length q of the main convex lens is preferably 50-300 mm, and the diameter X of the main convex lens is preferably 12-80 mm. The spatial range defined for the first optical signal is a cylindrical space with diameter R of preferably 12-80 mm distributed along an emergent optical axis of the main convex lens. The incident light angle $\alpha$ is preferably 1-4°. The distance between the main convex lens and the first reflecting mirror in the pair of reflecting mirrors is preferably 10-50 mm, and the distance between the first reflecting mirror and the second reflecting mirror is preferably 10-50 mm.

According to the technical solution of the above embodiment, by designing the main convex lens 11 with a specific optical parameter, the first reflecting mirror 121, and the second reflecting mirror 122, and adjusting the distance between the main convex lens 11 and the first reflecting mirror 121 and the distance between the first reflecting mirror 121 and the second reflecting mirror 122, the position distribution of the spot after passing through the main lens is regulated to a specific set range. Thus, the possible positions of the first optical signal at a proper distance are all within a specific spatial range, such that the photons of the first main optical path 04 can be detected by the optical signal detection device 02 as completely as possible.

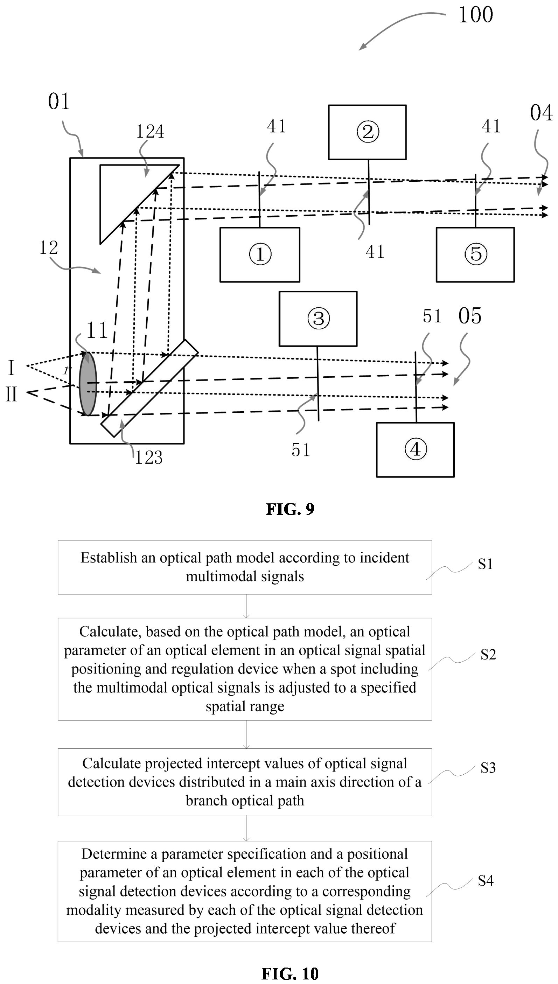

In an embodiment, refer to FIG. 9, FIG. 9 is a structural schematic diagram of an optical signal spatial positioning and regulation device according to another embodiment. The optical path guiding device 12 may further include second dichroic mirror 123 and third reflecting mirror 124. The second dichroic mirror 123 is disposed at a set distance from the light exit end of the main convex lens 11. The main convex lens 11 focuses the incident multimodal signals to output a first optical signal. The first optical signal is reflected to the third reflecting mirror 124 through the second dichroic mirror 123, and enters the first main optical path 04 after being reflected by the third reflecting mirror 124. A second optical signal is separated from the first optical signal through the second dichroic mirror 123 and directly transmitted to second main optical path 05. A plurality of optical signal detection devices 02 are distributed around the second main optical path 05, and each are configured to separate the optical signal from the second optical signal in the second main optical path 05 to form an independent branch optical path 51 for acquiring and measuring each modality of optical signal.

Exemplarily, for the position distribution of the optical signal detection devices 02 in the second main optical path 05, the position distribution scheme of the embodiment of the first main optical path 04 may be referred to. As in the above embodiment, the second main optical path 05 is separated from the first main optical path 04 by the second dichroic mirror 123, thereby forming a plurality of main optical paths. different main optical paths can be provided with different numbers of PMTs for acquiring optical signals of specific modalities. Thus, a plurality of PMTs can be distributed on different main optical paths, thereby reducing the space occupation and expanding to the optical signal acquisition of a larger number of channels. As illustrated, the PMTs (1), (2) and (5) among the five channels can be distributed on the first main optical path, and the PMTs (3) and (4) can be distributed on the second main optical path, which optimizes the overall spatial volume and improves the detection accuracy.

Embodiments of a configuration method of the optical signal detection system are described below.

Based on the optical signal detection system 100 provided in the above embodiments, during optical signal detection, optical signals with different diameters and parameters have different requirements for the optical devices of the optical signal detection system 100. In order to configure the optical signal detection system 100 accurately and ensure the accuracy of the detection results, the present disclosure provides the following configuration method of the optical signal detection system.

Refer to FIG. 10, FIG. 10 is a flowchart of a configuration method of an optical signal detection system according to an embodiment. The configuration method mainly includes the following processes.

S1. An optical path model is established according to the incident multimodal signals.

Specifically, an optical path model for optical path transmission of the optical signal detection system 100 is established according to the incident multimodal signals to be measured, thereby obtaining a corresponding physical model and a corresponding mathematical model.

S2. The optical parameter of the optical element in the optical signal spatial positioning and regulation device when the spot is adjusted to a specified spatial range is calculated based on the optical path model.

As an embodiment, an adjustment process of the step S2 may specifically include the following process.

S201. The distance between the incident multimodal signals and the main convex lens and the incident angle range are determined based on the optical path model.

Specifically, the distance from the multimodal signals to the main convex lens can be determined according to the optical transmission distance from the main convex lens 11 to an objective lens port, and the incident angle range can be determined according to the emission angles of various multimodal signals, i.e. the distance $H_1$ shown in FIG. 8 and the incident diameter r of the multimodal signals shown in FIG. 9.

S202. The specified spatial range to which the spot is adjusted is determined.

Specifically, in order to detect various multimodal signals within a limited space, the required spatial range for limiting the spot can be determined based on the design specifications, such as the volume, layout, and maximum optical path distance of the optical signal detection devices.

S203. The optical parameter of the optical element in the optical signal spatial positioning and regulation device is calculated according to the distance, the incident angle range, and the specified spatial range.

The optical parameter of the main convex lens 11, the distance L between the first reflecting mirror 121 and the second reflecting mirror 122, and the distance $H_2$ of the first reflecting mirror 121 relative to the main convex lens 11 can be calculated according to the determined parameters such as the distance between the incident multimodal optical signals and the main convex lens, the incident angle range, and the specified spatial range.

As an embodiment, the distance $H_2$ and the distance $L$ are calculated as follows:

$$H_2 = \alpha r^2 H_1 + \beta r$$

$$L = \gamma(H_1 + \delta H_2) + \varepsilon r^2$$

where, $\alpha$, $\beta$, $\gamma$, $\delta$, and $\varepsilon$ are set constants (exemplarily, $H_1$=125 mm, $r$=10.3 mm), which are specifically calculated as follows:

$$H_2 = 0.51 r^2 H_1 + 1.2r$$

$$L = 2.3(H_1 + 0.7 H_2) + 9.0 r^2$$

The technical solution of the above embodiment can calculate the distance $H_2$ and the distance L when the spot is adjusted to the specified spatial range.

S3. Projected intercept values of each optical signal detection device distributed in a main axis direction of the branch optical path are calculated.

Specifically, the projected intercept value of each PMT 23 in the main axis direction of the branch optical path 41 is calculated. For example, for the projected intercept $l_i$, i=1,2,3,4,5, as shown in FIG. 5, the corresponding values are the distance $l_1$ between the first dichroic mirror 21a and the second reflecting mirror 122 on the first main optical path 04, the distance l2 between the first dichroic mirror 21b and the first dichroic mirror 21a, the distance l3 between the first dichroic mirror 21c and the first dichroic mirror 21b, the distance l4 between the first dichroic mirror 21d and the first dichroic mirror 21c, and the distance 15 between the first dichroic mirror 21e and the first dichroic mirror 21d.

As an embodiment, the distance $l_i$ can be calculated as follows:

$$l_i = \zeta L + \eta r^2 + \theta r$$

where, $\zeta$, $\eta$, and $\theta$ are set constants, and $i$ denotes the number of the optical signal detection device; and exemplarily, based on the determined $H_1$, $r$ and $L$, the distances are specifically calculated as follows:

$$l_1 = 0.3L + 7.5r^2 + 10r$$

$$l_2 = 0.17L + 3.3r^2 + 10r$$

$$l_3 = 0.17L + 3.3r^2 + 10r$$

$$l_4 = 0.15L + 3.1r^2 + 7r$$

$$l_5 = 0.15L + 3.0r^2 + 7r$$

The technical solution of the above embodiment can calculate the projected intercept $l_i$ of the branch optical path in the main axis direction when determining the position of each first dichroic mirror 21 on the first main optical path 04.

S4. The parameter specifications and positional parameters of the built-in optical elements are determined according to the signal modalities measured by each optical signal detection device and their projected intercept values.

Specifically, the parameter specifications of the small convex lens 22 required for each branch optical path 41 are determined according to the signal modalities measured by the corresponding PMT 23 in combination with the projected intercept values of the branch optical paths 41, such as the first distance h1 between each small convex lens 22 and the first main optical path 04 and the second distance h2 between each small convex lens 22 and the PMT 23.

As an embodiment, the step S4 may include the following process.

S401. Working parameters of the PMTs used by each optical signal detection device are acquired, for example, parameters such as the size and shape of a photosensitive surface of the PMT, a collection cone, and inlet design.

S402. The first distance between the small convex lens of each optical signal detection device and the first main optical path and the second distance between each small convex lens and the PMT are acquired.

Specifically, the focal length and diameter of the small convex lens to be used and the mounting position of the PMT are acquired, the first distance between the first dichroic mirror and the corresponding small convex lens and the second distance between the PMT and the small convex lens are determined.

S403. The parameter specifications of the first dichroic mirror and the small convex lens are determined according to the projected intercept values, the first distance, the second distance, and the working parameters of the PMT.

Specifically, the parameter specifications of the small convex lens 22, such as the focal length and diameter of the small convex lens, can be calculated according to the projected intercept values, the first distance, the second distance, and the working parameters of the PMT.

Referring to FIGS. 4 to 7, the first distance h1 is the distance between the small convex lens 22 and the first dichroic mirror 21, and the second distance h2 is the distance between the small convex lens 22 and the PMT 23. For different optical signal detection devices 02, the optimal values of the first distance h1 may be the same or different, and the optimal values of the second distance h2 may also be the same or different. Thus, the optimal values can be obtained through optimization calculation. A constraint is set according to the parameters of the PMT 23 for detecting each modality of optical signal. The optimal parameter specifications of the small convex lens 22 are obtained by solving an objective function under the constraint.

As an embodiment, the distance $h_1$ and the distance $h_2$ can be calculated as follows:

$$h_{1i}=\kappa l_i+\lambda r^2$$

$$h_{2i}=\mu l_i+r$$

wherein, $\kappa$, $\lambda$, and $\mu$ are set constants, and $i$ denotes the number of the optical signal detection device; and exemplarily, based on the determined $l_i$ and $r$, the distances are specifically calculated as follows:

$$h_{1i}=7.0l_i+2.0r^2 i=1,2,3,4,5$$

$$h_{2i}=3.0l_i+r i=1,2,3,4,5$$

The technical solution of the above embodiment can accurately calculate the optimal parameter specifications of the small convex lens according to the selected layout positions of the small convex lens and the PMT. Generally, preferably, l1 to l5 take values of 10-50 mm, and may be the same or different. One or more of the small convex lenses corresponding to l1 to l5 are made of ultraviolet (UV) fused silica so as to completely receive all photons in the corresponding wavelength range of at least one modality of the optical signal. Preferably, h11 to h15 take values of 10-200 mm, and may be the same or different. Preferably, h21 to h25 take values of 10-200 mm, and may be the same or different. Preferably, the focal lengths of each small convex lens take values of 10-200 mm, and may be the same or different.

According to the technical solution of the above embodiment, simulation tests are carried out through the established optical path model. The spatial positioning of the optical signal on the optical axis is regulated by changing the parameters of the main convex lens 11 to realize accurate simulation and calculation. The optical parameters and positions of the small convex lens 22 are accurately determined, thereby obtaining the optimal layout positions of each small convex lens 22 and PMT 23 and the parameter specifications of the optical elements used. The acquisition parameters of each channel can be guaranteed to be complete based on the optimal layout positions. It is determined whether the detected parameters are complete through the subsequent feedback of detection parameters, thereby ensuring accurate quantitative detection of the PMT 23.

Embodiments of a femtosecond laser imaging system are described below.

The femtosecond laser imaging system provided in this embodiment includes the optical signal detection system 100 of the above embodiment, and the configuration method of the above embodiment for the optical signal detection system 100 is adopted for optical signal detection.

Exemplarily, refer to FIG. 10, FIG. 10 is a structural schematic diagram of a femtosecond laser imaging system according to an example. A laser light source generates a femtosecond laser pulse, and the femtosecond laser pulse is directed through a corresponding optical device and irradiated on a sample on a sample stage. The femtosecond laser pulse interacts with molecules of the sample to generate multimodal signals with non-overlapping or partially overlapping wavebands. Generally, the multimodal signals include harmonic waves and fluorescence signals of specific molecules. The harmonic waves can be divided into second harmonic waves, third harmonic waves or even fourth harmonic waves and above. In order to detect these multimodal optical signals, the optical signal detection system 100 including a plurality of independent channels is provided. As illustrated, channels 1 to 5 can independently acquire optical signals in 5 non-overlapping wavebands. Each channel correspondingly detects the spectral signal of a specific waveband in the multimodal signals, and finally the spectral signal is sent to a spectral signal processing device for processing and use. By employing the optical signal detection system 100 and its configuration method according to the embodiments of the present disclosure, the acquisition efficiency of each channel can be ensured. Moreover, based on the optimal layout positions of each small convex lens and PMT, the completeness of the acquisition parameters for each channel is guaranteed, thereby enabling accurate quantitative detection by the PMTs.

The above embodiments only represent some implementations of the present disclosure, and the description thereof is more specific and detailed, but cannot be construed as a limitation on the scope of the present disclosure. It should be noted that, for a person of ordinary skill in the art, several variations and improvements can be made without departing from the concept of the present disclosure, all of which fall within the protection scope of the present disclosure. Therefore, the protection scope of the present disclosure shall be subject to the appended claims.

**Claims**

1.  An optical signal detection system, comprising: an optical signal spatial positioning and regulation device, and a plurality of optical signal detection devices configured to measure multimodal signals, wherein the optical signal spatial positioning and regulation device is internally provided with an optical element with a specific optical parameter; and the optical signal detection devices each are internally provided with an optical element and an optical signal measuring device;

    the optical signal spatial positioning and regulation device is configured to perform spatial positioning and regulation on the multimodal signals incident from various angles to obtain a first optical signal and output the first optical signal to a first main optical path, such that the first optical signal is adjusted to a specific spatial range within a set transmission distance on the first main optical path; and
    the optical signal detection devices are distributed at intervals around the first main optical path, and are each configured to separate an optical signal from the first optical signal in the first main optical path to form a respective independent branch optical path and to acquire and measure a respective modality of optical signal via the branch optical path.

2.  The optical signal detection system according to claim 1, wherein the optical signal detection devices each comprise a first dichroic mirror disposed on the first main optical path, and a small convex lens and a photomultiplier tube (PMT) that are disposed on the branch optical path; and the first dichroic mirror is disposed at a position with a set distance from the optical signal spatial positioning and regulation device; and
    the first dichroic mirror is configured to separate the optical signal from the first optical signal in the first main optical path to form the branch optical path; and the branch optical path is directed through the small convex lens into the PMT for measurement.

3.  The optical signal detection system according to claim 1, wherein the optical signal spatial positioning and regulation device comprises a main convex lens with a set parameter and an optical path guiding device; and
    the main convex lens is configured to perform spatial positioning and regulation on the multimodal signals incident from various angles and output the first optical signal; and the optical path guiding device is configured to guide the first optical signal into the first main optical path.

4.  The optical signal detection system according to claim 3, wherein the optical path guiding device comprises a pair of reflecting mirrors; the pair of reflecting mirrors comprises a first reflecting mirror and a second reflecting mirror disposed opposite to each other; and the first reflecting mirror is disposed at a set distance from a light exit end of the main convex lens; and
    the first optical signal is reflected by a reflecting surface of the first reflecting mirror, and then reflected by a reflecting surface of the second reflecting mirror into the first main optical path.

5.  The optical signal detection system according to claim 3, wherein the optical path guiding device comprises a second dichroic mirror and a third reflecting mirror; and the second dichroic mirror is disposed at a set distance from a light exit end of the main convex lens;

    the main convex lens is configured to focus the incident multimodal signals and output the first optical signal; and the first optical signal is reflected to the third reflecting mirror through the second dichroic mirror, and is reflected by the third reflecting mirror into the first main optical path;
    a second optical signal is separated from the first optical signal through the second dichroic mirror, and is directly transmitted into a second main optical path; and
    a plurality of optical signal detection devices are distributed around the second main optical path, and are each configured to separate an optical signal from the second optical signal in the second main optical path to form a respective independent branch optical path and to acquire and measure a respective modality of optical signal.

6.  The optical signal detection system according to claim 4 or 5, wherein the optical signal detection devices are distributed at intervals on two sides of the first main optical path and/or the second main optical path.

7.  The optical signal detection system according to claim 4 or 5, wherein the optical signal detection devices are distributed at intervals in a three-dimensional space around the first main optical path and/or the second main optical path.

8.  A configuration method of an optical signal detection system, wherein the optical signal detection system comprises: an optical signal spatial positioning and regulation device, and a plurality of optical signal detection devices configured to measure multimodal signals; the optical signal spatial positioning and regulation device is internally provided with an optical element with a specific optical parameter; and the optical signal detection devices each are internally provided with an optical element and an optical signal measuring device;

the optical signal spatial positioning and regulation device is configured to perform spatial positioning and regulation on the multimodal signals incident from various angles to obtain a first optical signal and output the first optical signal to a first main optical path, such that the first optical signal is adjusted to a specific spatial range within a set transmission distance on the first main optical path;

the optical signal detection devices are distributed at intervals around the first main optical path, and are each configured to separate an optical signal from the first optical signal in the first main optical path to form a respective independent branch optical path and to acquire and measure a respective modality of optical signal via the branch optical path; and the configuration method comprises:

establishing an optical path model according to the incident multimodal signals;

calculating, based on the optical path model, the optical parameter of the optical element in the optical signal spatial positioning and regulation device when a spot comprising the multimodal optical signals is adjusted to a specified spatial range;

calculating projected intercept values of the optical signal detection devices distributed in a main axis direction of the branch optical path; and

determining a parameter specification and a positional parameter of the optical element in each of the optical signal detection devices according to the corresponding modality measured by each of the optical signal detection devices and the projected intercept value thereof.

9. The configuration method of an optical signal detection system according to claim 8, wherein the optical signal detection devices each comprise a first dichroic mirror disposed on the first main optical path, and a small convex lens and a PMT that are disposed on the branch optical path; and the first dichroic mirror is disposed at a position with a set distance from the optical signal spatial positioning and regulation device; and the first dichroic mirror is configured to separate the optical signal from the first optical signal in the first main optical path to form the branch optical path; and the branch optical path is directed through the small convex lens into the PMT for measurement.

10. The configuration method of an optical signal detection system according to claim 8, wherein the optical signal spatial positioning and regulation device comprises a main convex lens with a set parameter and an optical path guiding device; and the main convex lens is configured to perform spatial positioning and regulation on the multimodal signals incident from various angles and output the first optical signal; and the optical path guiding device is configured to guide the first optical signal into the first main optical path.

11. The configuration method of an optical signal detection system according to claim 8, wherein the optical path guiding device comprises a pair of reflecting mirrors; the pair of reflecting mirrors comprises a first reflecting mirror and a second reflecting mirror disposed opposite to each other; and the first reflecting mirror is disposed at a set distance from a light exit end of the main convex lens; and the first optical signal is reflected by a reflecting surface of the first reflecting mirror, and then reflected by a reflecting surface of the second reflecting mirror into the first main optical path.

12. The configuration method of an optical signal detection system according to claim 11, wherein the optical path guiding device comprises a second dichroic mirror and a third reflecting mirror; and the second dichroic mirror is disposed at a set distance from a light exit end of the main convex lens;

the main convex lens is configured to focus the incident multimodal signals and output the first optical signal; and the first optical signal is reflected to the third reflecting mirror through the second dichroic mirror, and is reflected by the third reflecting mirror into the first main optical path;

a second optical signal is separated from the first optical signal through the second dichroic mirror, and is directly transmitted into a second main optical path; and

a plurality of optical signal detection devices are distributed around the second main optical path, and are each configured to separate an optical signal from the second optical signal in the second main optical path to form a respective independent branch optical path and to acquire and measure a respective modality of optical signal.

13. The configuration method of an optical signal detection system according to claim 11 or 12, wherein the optical signal detection devices are distributed at intervals on two sides of the first main optical path and/or the second main optical path.

14. The configuration method of an optical signal detection system according to claim 11 or 12, wherein the optical signal detection devices are distributed at intervals in a three-dimensional space around the first main optical path and/or the second main optical path.

15. The configuration method of an optical signal detection system according to claim 8, wherein the calculating, based on the optical path model, the optical parameter of the optical element in the optical signal spatial positioning and regulation device when a spot is adjusted to a specified spatial range comprises:

    determining, based on the optical path model, a distance between the incident multimodal signals and a main convex lens and an incident angle range;
    determining the specified spatial range to which the spot is adjusted; and
    calculating the optical parameter of the optical element in the optical signal spatial positioning and regulation device according to the distance, the incident angle range, and the specified spatial range.

16. The configuration method of an optical signal detection system according to claim 15, wherein the determining a parameter specification and a positional parameter of the optical element in each of the optical signal detection devices according to the corresponding modality measured by each of the optical signal detection devices and the projected intercept value thereof comprises:

    acquiring a working parameter of a PMT used by each of the optical signal detection devices;
    acquiring a first distance between a small convex lens of each of the optical signal detection devices and the first main optical path and a second distance between the small convex lens and the PMT; and
    determining a parameter specification of a first dichroic mirror and the small convex lens according to the projected intercept value, the first distance, the second distance, and the working parameter of the PMT.

17. A femtosecond laser imaging system, comprising the optical signal detection system according to any one of claims 1 to 7.

18. A femtosecond laser imaging system, configured to perform optical signal detection by the configuration method of an optical signal detection system according to any one of claims 8 to 16.

19. A femtosecond laser imaging system, comprising the optical signal detection system according to any one of claims 1 to 7, and configured to perform optical signal detection by the configuration method of an optical signal detection system according to any one of claims 8 to 16.

**FIG. 1**

**FIG. 2**

**FIG. 3**

**FIG. 4**

**FIG. 5**

**FIG. 6**

**FIG. 7**

**FIG. 8**

**FIG. 9**

| | |
|---|---|
| Establish an optical path model according to incident multimodal signals | S1 |
| Calculate, based on the optical path model, an optical parameter of an optical element in an optical signal spatial positioning and regulation device when a spot including the multimodal optical signals is adjusted to a specified spatial range | S2 |
| Calculate projected intercept values of optical signal detection devices distributed in a main axis direction of a branch optical path | S3 |
| Determine a parameter specification and a positional parameter of an optical element in each of the optical signal detection devices according to a corresponding modality measured by each of the optical signal detection devices and the projected intercept value thereof | S4 |

**FIG. 10**

Laser
pulse

Laser light source

Sample

Multimodal
signals

Optical signal detection system 100

| Channel 1 | Channel 2 | Channel 1 | Channel 2 | Channel 5 |

Spectral signal processing device

**FIG. 11**

## INTERNATIONAL SEARCH REPORT

| | International application No. |
|---|---|
| | **PCT/CN2024/110980** |

| **A.** | **CLASSIFICATION OF SUBJECT MATTER** |
|---|---|

G01N21/64(2006.01)i;  G01J1/42(2006.01)i

According to International Patent Classification (IPC) or to both national classification and IPC

| **B.** | **FIELDS SEARCHED** |
|---|---|

Minimum documentation searched (classification system followed by classification symbols)

IPC:G01N

Documentation searched other than minimum documentation to the extent that such documents are included in the fields searched

Electronic data base consulted during the international search (name of data base and, where practicable, search terms used)

WPABSC, CNTXT, ENTXTC, CNKI, ENTXT: 飞秒, 多模态, 二向色镜, 反射镜, 透镜, 物镜, 光电倍增管, 距离, 角度, 孔径, femtosecond, multi-modal, dichroic mirror, reflector, lens, object lens, PMT, distance, angle, aperture

| **C.** | **DOCUMENTS CONSIDERED TO BE RELEVANT** | |
|---|---|---|
| Category* | Citation of document, with indication, where appropriate, of the relevant passages | Relevant to claim No. |
| X | CN 107462336 A (FEMTOSECOND LASER RESEARCH CENTER (GUANGZHOU) CO., LTD.) 12 December 2017 (2017-12-12) description, paragraphs 39-89, and figures 1-4 | 1,3-8,10-14,17-19 |
| Y | CN 107462336 A (FEMTOSECOND LASER RESEARCH CENTER (GUANGZHOU) CO., LTD.) 12 December 2017 (2017-12-12) description, paragraphs 39-89, and figures 1-4 | 2,9 |
| Y | CN 110487756 A (YANG JIAMIAO) 22 November 2019 (2019-11-22) description, paragraphs 12 and 30, and figure 3 | 2,9 |
| PX | CN 117129450 A (FEMTOSECOND LASER RESEARCH CENTER (GUANGZHOU) CO., LTD.) 28 November 2023 (2023-11-28) claims 1-10 | 1-19 |
| A | WO 2023015798 A1 (SHENZHEN INSTITUTE OF ADVANCED TECHNOLOGY) 16 February 2023 (2023-02-16) entire document | 1-19 |
| A | US 2016377546 A1 (TISSUEVISION INC.) 29 December 2016 (2016-12-29) entire document | 1-19 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 October 2024** | **13 November 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/110980**

### C.    DOCUMENTS CONSIDERED TO BE RELEVANT

| Category* | Citation of document, with indication, where appropriate, of the relevant passages | Relevant to claim No. |
|---|---|---|
| A | WO 2023025062 A1 (TOWARDPI (BEIJING) MEDICAL TECHNOLOGY LTD.) 02 March 2023 (2023-03-02)<br>entire document | 1-19 |

Form PCT/ISA/210 (second sheet) (July 2022)

**INTERNATIONAL SEARCH REPORT**
Information on patent family members

International application No.

**PCT/CN2024/110980**

| Patent document cited in search report | | | Publication date (day/month/year) | Patent family member(s) | | | Publication date (day/month/year) |
|---|---|---|---|---|---|---|---|
| CN | 107462336 | A | 12 December 2017 | WO | 2019062844 | A1 | 04 April 2019 |
| | | | | EP | 3667273 | A1 | 17 June 2020 |
| | | | | EP | 3667273 | B1 | 10 November 2021 |
| | | | | US | 2020295519 | A1 | 17 September 2020 |
| | | | | US | 11128096 | B2 | 21 September 2021 |
| | | | | JP | 2020535444 | A | 03 December 2020 |
| | | | | JP | 7117794 | B2 | 15 August 2022 |
| CN | 110487756 | A | 22 November 2019 | None | | | |
| CN | 117129450 | A | 28 November 2023 | None | | | |
| WO | 2023015798 | A1 | 16 February 2023 | CN | 115702777 | A | 17 February 2023 |
| US | 2016377546 | A1 | 29 December 2016 | JP | 2017502300 | A | 19 January 2017 |
| | | | | JP | 6596001 | B2 | 23 October 2019 |
| | | | | EP | 3087423 | A1 | 02 November 2016 |
| | | | | WO | 2015100421 | A1 | 02 July 2015 |
| WO | 2023025062 | A1 | 02 March 2023 | CN | 113520299 | A | 22 October 2021 |

Form PCT/ISA/210 (patent family annex) (July 2022)